# EUROPEAN PATENT APPLICATION

(11) **EP 2 749 536 A1**
(43) Date of publication of application: **02.07.2014**
(21) Application number: 12851582.2
(22) Date of filing: 27.08.2012
(51) Int. Cl.: C01G 49/02, H01F 1/10

(54) **METHOD FOR PRODUCING HIGH-PURITY SYNTHETIC MAGNETITE BY OXIDATION FROM METAL WASTE AND APPLIANCE FOR PRODUCING SAME**

(30) Priority: 26.08.2011 CO 11109516
(71) Applicant: Jaramillo Botero, Gabriel Santiago, Boyacá (CO)
(72) Inventor: Jaramillo Botero, Gabriel Santiago, Boyacá (CO)
(74) Representative: Carpintero Lopez, Francisco
(86) International application number: PCT/IB2012/002165
(87) International publication number: WO 2013/076539

(57) **Abstract**

The invention relates to a method for producing magnetite with a purity of no less than 90% and higher than 98%, by oxidation of pulverized Wüstite (iron oxide), at temperatures ranging from 200°C to 800°C, with the addition of water in liquid or steam form, in counter-current or concurrently, in an externally heated reaction chamber with a controlled atmosphere. The amount of water used to oxidize the Wüstite being 60 to 500 ml per kilogram of Wüstite, the grains of Wüstite powder injected into the reaction chamber having a size no greater than 100µm for optimal reaction.

## Description

### BACKGROUND OF THE INVENTION

### Field of the invention

The present invention consists in a method for converting wüstite into high-purity synthetic magnetite. Specifically the invention describes a process of oxidation of wüstite powder with water vapor flow under high temperature, where Wüstite is oxidised in a reactor with counter flow or concurrently flow, for a set time and at a temperature such that allow for total oxidation from wüstite to magnetite.

### State of the art

There are several processes known for obtaining magnetite, Fe₃O₄, from hematite, Fe2O3. The conversion of hematite into magnetite is done by a chemical reduction. The reducing agents commonly used for this process are gas hydrogen, carbon monoxide, gas methane, propane, gas ethane, etc.

The production of hematite by spraying ferric chloride is known to produce granular hematite and its subsequent reduction to temperatures of about 900° C to 1000°C. The reduction is done with the use of hydrogen and carbon monoxide upstream of hematite granules from a flame from a burner. Reducing conditions are maintained throughout the reactor with the injection of additional gas near the discharge zone. See for example US patent No. 4,436,681 where neither the purity grades achieved nor the operating conditions are mentioned.

The reduction of hematite by a reducing gas in the presence of a non-ferrous inorganic compound powder at temperatures close to 200° C and 700° C stopping the reduction around the middle of the stream to produce a partially reduced powder, and superficially oxidizing the partially reduced powder with a gas containing oxygen to produce a powder composed of magnetite and iron is also known. The reducer gas can be hydrogen, carbon monoxide, methane or ethane. See, U.S. Pat. NO. 6,827,757. The purity obtained in this process is 83%.

### PROCESS FOR OBTAINING HIGH-PURITY SYNTHETIC MAGNETITE BY OXIDATION FROM METAL RESIDUES AND APPARATUS TO PRODUCE IT

### ABSTRACT

The invention relates to a method for producing magnetite with a purity of no less than 90% and higher than 98%, by oxidation of pulverized wüstite (iron oxide), at temperatures ranging from 200°C to 800°C, with the addition of water in liquid or steam form, in counter-current or concurrently, in an externally heated reactor with a controlled atmosphere. The amount of water used to oxidize wüstite being 60 to 500 ml per kilogram of wüstite, the grains of wüstite powder injected into the reactor having a size no greater than 100 µm.

### 1 Field of invention

The present invention is a process to produce high-purity synthetic magnetite from wüstite. In particular, the invention refers to a process of oxidation of wüstite in a reactor at high temperatures and with controlled atmosphere with a flow of water or a flow of water steam in countercurrent or concurrent, over a period of time which may allow total reaction of wüstite and its conversion into magnetite. The invention contemplates the design of a reactor which, when heated, forms the result of this invention. The reaction is described in the following equation:

**3*FeO*_{(*s*)} + *H*₂*O*_{(*g*)} → *Fe*₃*O*_{4(*s*)} + *H*_{2(*g*)}**

### 2 Description of the Technique

Ancestrally magnetite was obtained from natural deposits and extraction involves methods and machines that do not have a significant impact on the environment. The method is costly due to the hardness of rock mineral magnetite.

For several years it is known how to convert the compound hematite Fe₂O₃ into magnetite Fe₃O₄. Hematite is an iron ore reddish brown by-product of the regeneration of hydrochloric acid used in pickling or cleaning of steel wires in processes such as electroplating. Iron chloride, widely used in industry, has been traditionally obtained from them. The synthetic magnetite obtained by reduction from this process is used for its magnetic properties, or as a pigment.

It is known that the conversion of hematite into magnetite occurs in the presence of a reducing agent such as hydrogen, carbon monoxide, methane gas or a liquid such as oil. The presence of monoxide gas, liquid petroleum gas, methane gas or natural gas, acts as a reducing agent allowing the reduction of hematite to magnetite. See U. S. patents 5,348,160 and 5,749,791.

It has also been known how to reduce the hematite Fe₂O₃ of a non-ferrous inorganic powder, with temperatures of about 200 to 700° C in the presence of a reducing gas, to suspend midway powder reduction to produce a partially reduced powder, and then oxidize the surface of the partially reduced powder with oxygen-containing gas to produce a composite powder comprising magnetite and iron. The reducing gas may be hydrogen, carbon monoxide, methane or ethane gas as disclosed in U.S. Patent 6,827,757. The purity of the process is approximately 83%.

The known processes for producing magnetite from hematite are costly because they require several steps which make difficult to obtain magnetite.

In the metallurgical industry a lot of metallic waste (called mill scale) is produced, from 2% to 3% for each heating, as a result of oxidation caused by the high temperatures, generally exceeding 800° C. They not have a profitable industrial application. This creates an obvious environmental impact and evident cost of disposal. Blast furnace steelmakers can use this mill scale adding it to the clinker or in furnace charge because this process involves CO₂ reduction. However the cost of transportation makes it a very expensive raw material for recycling mil scales as found in other industries such as the producers of steel bars, steel sheets or electric furnaces and continuous casting. These wastes are characterized by having an approximate composition of 70% wüstite, 25% magnetite, and 5% of hematite. The composition may vary depending on factors such as alloy composition under high temperature, heating time, applied temperature, or heat shock treatment, etc.

The mill scale is usually stacked or placed in large pits with other metal or non-metal scrap, or electric furnace slag. This requires the adaptation of land for this purpose but does not prevent the permanent and indefinite accumulation of this waste because there is to date no appropriate method of recycling. In the country 80,000 tons of steel are produced monthly in the three main steel companies, which leads to an output of 1600-2400 tons per month of scale that accumulate and can turn into a real environmental problem.

## Claims

1. A process for producing high-purity synthetic magnetite according to the following description: feeding wüstite into one end of a reactor by means of a feed screw attached to a pendulum device that prevents steam output and powder pollution to the atmosphere; a water supply system or steam concurrently or counter currently as thermochemical transformation reagent; a heating system with external heating which can raise the temperature of the reagents up to a range between 200° C and 800° C which accelerates the conversion of magnetite into high-purity synthetic wüstite; an evacuation system for magnetite by a feed screw attached to a pendulum device or trap stream that prevents release of vapor and powder pollutants into the atmosphere, and cooling and collection of synthetic magnetite where it has at least 95% of purity and can reach more than 98%.

2. The process for producing high-purity synthetic magnetite **characterised in that** it uses scrap from steel industry, called mill scale, generated during heating of steel or iron at temperatures above 800° C.

3. The process according to Claim 1, including the use of temperatures in the range of 200° C to 800° C, preferably 500° C.

4. The process according to Claim 1, wherein the heating or burner device has a length of about 60% of the length of the reactor to the discharge outlet of the reactor.

5. The process according to Claim 1 wherein the steam supplied to the reaction is between 57 g and 570 g per kilogram of wüstite introduced in the reactor.

6. The process according to Claim 1 wherein the steam feeding and wüstite feeding are simultaneous and enter the reactor through opposite ends and travel through the reactor in opposite direction or countercurrent, so that the water vapor runs from the outlet to the inlet side and wüstite from the inlet side to the output side.

7. The process according to Claim 1 wherein the raw material is derived from the oxide layer, crystal-like, consisting of 73% to 23% wüstite and magnetite respectively, which is formed at high temperature on the surface of steel and falls naturally in cooling or process of stacking, laminating, rolling, wire drawing, forging, etc. or mechanically forced manner.

8. The process according to claims 1 and 7, wherein wüstite may come from steel scrap where there is a material that is generally considered as industrial waste.

9. The process according to claims 1 and 8 wherein wüstite may come from the process of wire drawing of steel wire, scale from iron cold rolling or hot rolling.
